# EUROPÄISCHE PATENTSCHRIFT

(11) **EP 2 006 549 B1**
(45) Veröffentlichungstag und Bekanntmachung des Hinweises auf die Patenterteilung: **26.08.2009**
(21) Anmeldenummer: 07012225.4
(22) Anmeldetag: 22.06.2007
(51) Int. Cl.: F15B 15/28

(54) **Messvorrichtung zur Messung wenigstens eines Parameters in einem fluidischen Zylinder mit Hilfe von Mikrowellen**
Measuring device for measuring at least one parameter in a liquid cylinder using microwaves
Dispositif de mesure destiné à la mesure d'au moins un paramètre dans un cylindre fluidique à l'aide de micro-ondes

(43) Veröffentlichungstag der Anmeldung: 24.12.2008
(73) Patentinhaber: FESTO AG & Co. KG, 73734 Esslingen (DE)
(72) Erfinder: Reininger, Thomas, 73249 Wernau (DE); Maier, Marcus, 73760 Ostfildern (DE); Geisbusch, Lothar, 73760 Ostfildern (DE)
(74) Vertreter: Vetter, Hans

(56) Entgegenhaltungen:
- WO-A-20/06073717
- DE-A1- 10 205 904
- US-A- 6 142 059

## Beschreibung

Die Erfindung betrifft eine Messvorrichtung zur Messung wenigstens eines Parameters in einem fluidischen Zylinder mit Hilfe von Mikrowellen, mit einer an einem Zylinderdeckel des Zylinders angeordneten Sende-/Empfangsantennenanordnung zum Absenden von Mikrowellen und zum Empfang der am Kolben des Zylinders reflektierten Mikrowellen.

Aus der DE 10205904 A1 ist eine derartige Messvorrichtung bekannt, die zur Positionsbestimmung des Kolbens dient. Dies erfolgt über eine direkte oder indirekte Laufzeitmessung der abgesandten und reflektierten Mikrowellen, insbesondere durch Erfassung der Phasenverschiebung. Andere Parameter können mit Hilfe dieser bekannten Messvorrichtung nicht erfasst werden.

Zur Regelung der Kolbenposition in fluidischen Zylindern ist es von Vorteil, neben der Position des Kolbens auch noch dessen momentane Geschwindigkeit und die momentane Beschleunigung zu kennen. Zwar kann die Geschwindigkeit mittels einer einfachen und die Beschleunigung mittels einer zweifachen Ableitung der Position nach der Zeit ermittelt werden, jedoch liegen diese Informationen dann mindestens um ein Positions-Messintervall zeitverzögert vor. Neben der Zeitverzögerung besteht das Problem, dass verrauschte Positionssignale, zum Beispiel durch Quantisierungsrauschen bedingt durch die endliche Auflösung des Wegmesssystems, zu umso stärker verrauschten abgeleiteten Geschwindigkeits- beziehungsweise Beschleunigungssignalen führen.

Prinzipiell wäre es daher besser, die Beschleunigung direkt mit einem Beschleunigungssensor zu messen. Abgesehen davon, dass auch der Beschleunigungssensor eine gewisse Trägheit aufweisen wird, ist die Beschleunigung des Kolbens generell eine verzögerte Wirkung der Ursache, nämlich des Luftdruckunterschieds an den Flächen des Kolbens. Die Verzögerung kommt vor allem daher, dass der Übergang zwischen Haft- und Gleitreibung des Kolbens undefiniert ist.

Für eine optimale Regelung der Kolbenposition hat es sich als vorteilhaft erwiesen, den momentanen Luftdruck an den beiden Wirkflächen des Kolbens beziehungsweise den Differenzdruck zwischen den beiden Flächen mit einzubeziehen. Das Problem besteht jedoch darin, dass ein Drucksensor, der sich am Kolben befindet und sich mit diesem bewegt, mit den bekannten Methoden nur sehr aufwendig abgefragt werden kann, da einerseits Schleifkontakte nicht in Betracht kommen und bekannte kapazitive und/oder induktive Übertragungsverfahren wegen der geringen Reichweite nur sehr umständlich und aufwendig realisierbar sind und eine Modifikation der Zylinderwand erforderlich machen, insbesondere bei sehr langen Zylindern. Es käme auch noch die Möglichkeit in Betracht, die Messung des Drucks an den Zuleitungen zu den Zylinderkammern oder an den Zylinderdeckeln vorzunehmen, jedoch darf dabei nicht übersehen werden, dass es infolge der dynamischen Vorgänge bei der Servofluidik zur Ausbildung von Druckwellen innerhalb des Zylinders kommt. Dies bedeutet, dass zu einem bestimmten Zeitpunkt im Raum zwischen Kolben und Lufteinlass kein konstanter Druck herrscht. Für die Kolbenbewegung ist indes der Druck unmittelbar am Kolben entscheidend. Ähnliche Probleme treten bei der Messung von anderen Parametern auf.

Eine Aufgabe der vorliegenden Erfindung besteht darin, eine Messvorrichtung zur Messung von Parametern direkt am oder im Kolben zu schaffen, deren Messsignale in einfacher Weise auch bei langen Zylindern ohne Veränderung der Zylinderwandung übertragen werden können.

Diese Aufgabe wird erfindungsgemäß durch eine Messvorrichtung mit den Merkmalen des Anspruchs 1 gelöst.

Die Vorteile der erfindungsgemäßen Messvorrichtung, bei der Sensorsignale von am Kolben angeordneten Sensoren über Mikrowellensignale zu einem der beiden Zylinderdeckel übertragen werden, bestehen darin, dass lediglich der Zylinderdeckel durch Anordnung einer Sende-/Empfangsantennenanordnung und gegebenenfalls durch eine Auswerteeinrichtung und einen Mikrowellengenerator modifiziert werden muss, während der übrige Zylinder beziehungsweise die Zylinderwandung unverändert bleiben kann. Die Länge des Zylinders spielt dabei keine Rolle. Eine Übertragung auch unterschiedlicher Sensorsignale von unterschiedlichen Sensoren ist ohne weiteres möglich. Eine Zeitverzögerung bei der Übertragung der Sensorsignale tritt in einem für die Positionsregelung des Kolbens relevanten Umfang nicht auf. Es können herkömmliche Zylinder mit einer solchen Messvorrichtung ausgestattet werden, bei denen lediglich ein Zylinderdeckel und der Kolben ausgetauscht werden müssen.

Durch die in den Unteransprüchen aufgeführten Maßnahmen sind vorteilhafte Weiterbildungen und Verbesserungen der im Anspruch 1 angegebenen Messvorrichtung möglich.

In vorteilhafter Weise ist am Kolben eine mit dem Modifikator verbundene Antennenanordnung zum Auskoppeln wenigstens eines Teils der ankommenden Mikrowellen und zur Abstrahlung der in Abhängigkeit der Sensorsignale modifizierten Mikrowellen angeordnet. Diese Antennenanordnung ist zweckmäßigerweise als in oder an der Oberfläche des Kolbens integrierte Antennenanordnung, insbesondere als wenigstens eine sogenannte konforme Antenne oder als Patch-Antenne, ausgebildet.

Der am Kolben angeordnete Sensor ist bevorzugt ein Drucksensor, insbesondere ein Differenzdrucksensor zur Erfassung der in den beiden durch den Kolben getrennten Zylinderkammern vorliegenden Drücke direkt am Kolben. Diese Differenzdrucksignale können wesentlich zur Erhöhung der Positionsgenauigkeit bei einer Positionsregelung des Kolbens beitragen. Zusätzlich können auch noch andere Sensoren am Kolben angeordnet sein, beispielsweise Beschleunigungssensoren oder Temperatursensoren, deren Signale in entsprechender Weise übertragen werden.

Die Sende-/Empfangsantennenanordung am Zylinderdeckel ist zweckmäßigerweise mit einer Auswerteeinrichtung zur Auswertung der reflektierten beziehungsweise zurückkommenden Mikrowellen und mit einem Mikrowellengenerator verbunden, wobei die Auswerteeinrichtung und/oder der Mikrowellengenerator vorzugsweise in oder am Zylinderdeckel angeordnet beziehungsweise integriert sein kann. Der Mikrowellengenerator und die Auswerteeinrichtung können auch als kombiniertes Modul ausgebildet sein.

Eine erste Möglichkeit zur Sensorsignalübertragung besteht darin, dass der Modifikator ein passiver Modifikator ist, wobei der wenigstens eine Sensor in einem Schwingkreis eingebunden ist und insbesondere dessen Kapazität bildet, und wobei die Auswerteeinrichtung Mittel zur Erfassung von resonanzbedingten Veränderungen der reflektierten und rücklaufenden Mikrowellen besitzt.

Eine zweite vorteilhafte Möglicht zur Sensorsignalauswertung besteht darin, dass ein wiederum passiver Modifikator einen passiven Frequenzvervielfacher sowie Mittel zum Zurücksenden von sensorsignalabhängigen Informationen mittels über in ihrer Frequenz veränderten Mikrowellen besitzt.

Eine dritte vorteilhafte Möglichkeit zur Auswertung besteht darin, dass der Modifikator ein aktiver Modifikator ist und Mittel zur Erzeugung von Versorgungsenergie aus den empfangenen Mikrowellen sowie Mittel zum Aufprägen oder Verändern der rücklaufenden Mikrowellen besitzt.

In besonders vorteilhafter Weise können die zur Sensorsignalübertragung verwendeten Mikrowellen zusätzlich zur Positionserfassung des Kolbens verwendet werden, wobei hierzu die Auswerteeinrichtung Mittel zur Positionserfassung des Kolbens durch Laufzeitmessung der abgesendeten und reflektierten Mikrowellen besitzt, insbesondere durch Erfassung der Phasenverschiebung.

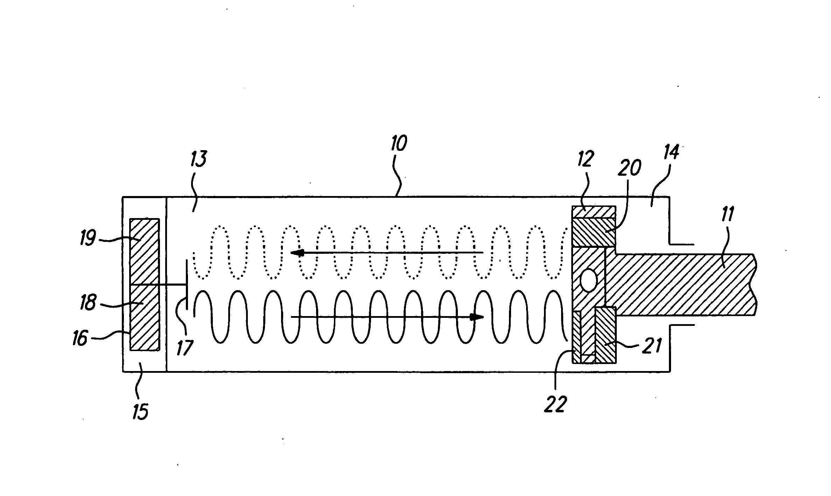

Ein Ausführungsbeispiel der Erfindung ist in der Zeichnung dargestellt und in der nachfolgenden Beschreibung näher beschrieben. Die einzige Figur zeigt schematisch einen fluidischen Zylinder, der mit einer Mikrowellen-Messvorrichtung versehen ist, als Ausführungsbeispiel der Erfindung.

Dieses einzige Ausführungsbeispiel zeigt schematisch einen fluidischen Zylinder 10, in dem ein mit einer Kolbenstange 11 versehener Kolben 12 verschiebbar geführt ist. Der Kolben 12 teilt den Innenraum des Zylinders 10 in zwei Zylinderkammern 13, 14 auf, wobei die fluidischen Zuleitungen zu den beiden Zylinderkammern 13, 14 und eine entsprechende fluidische Steuerung zur Vereinfachung nicht dargestellt sind. Der von der Kolbenstange 11 entfernte Endbereich des Zylinders 10 ist durch einen Zylinderdeckel 15 abgeschlossen. Auf Seiten der Kolbenstange 11 kann der Zylinder 10 ebenfalls durch einen nicht näher dargestellten Zylinderdeckel abgeschlossen sein, durch den die Kolbenstange 11 hindurchgeführt ist.

Im Zylinderdeckel 15 ist ein Mikrowellenmodul 16 integriert, das mit einer Koppelsonde beziehungsweise Antenne 17 verbunden ist. Das Mikrowellenmodul 16 enthält einen Mikrowellengenerator 18 und eine Auswerteeinrichtung 19, wobei auch separate Einrichtungen möglich sind. Prinzipiell können der Mikrowellengenerator 18 und die Auswerteeinrichtung auch außerhalb am Zylinderdeckel 15 oder von diesem entfernt angeordnet sein, wobei dann entsprechend geeignete Verbindungsleitungen erforderlich sind.

Die vom Mikrowellengenerator 18 erzeugten Mikrowellen werden mittels der Antenne 17 in den Zylinder 10 eingekoppelt. Die Mikrowellenfrequenz muss groß genug sein, damit der Zylinder 10 als Hohlleiter wirkt. Dies ist oberhalb der sogenannten kritischen Frequenz des betreffenden Hohlleiter-Wellentyps der Fall. In einem Zylinderrohr mit dem Durchmesser 50 mm kann sich zum Beispiel oberhalb einer Frequenz von 3,5 GHz eine H11-Welle und oberhalb von 4,6 GHz eine E01-Welle ausbreiten. Die Welle läuft dann in Richtung des Kolbens 12, wird durch diesen reflektiert, und die zurücklaufende Welle wird dann über die Antenne 17 wieder eingekoppelt und in der Auswerteeinrichtung 19 ausgewertet. Dies ist im eingangs angegebenen Stand der Technik so zur Erfassung der Kolbenposition beschrieben, wobei diese mittels der Laufzeitmessung der Mikrowelle, beispielsweise durch Erfassung der Phasenverschiebung, gemessen wird.

Die Antenne 17 zur Ein- und Auskopplung der Mikrowellen kann auch als Antennenanordnung mit mehreren Antennen ausgebildet sein.

Am Kolben 12 befindet sich ein Differenzdrucksensor 20 zur Erfassung des Differenzdrucks zwischen den beiden Zylinderkammern 13, 14. Dieser Differenzdrucksensor 20 ist mit einem elektronischen Modifikator im Kolben 12 und dieser mit einer Antenne 22 verbunden, die an der zum Zylinderdeckel 15 hinweisenden Seite des Kolbens 12 beispielsweise als in die Oberfläche des Kolbens 12 integrierte Antenne ausgebildet ist, beispielsweise als sogenannte konforme Antenne oder Patch-Antenne. Auch diese Antenne 22 kann als Antennenanordnung mit mehreren Antennen ausgebildet sein, zum Beispiel einer Empfangs- und einer Sendeantenne.

Über die Antenne 22 wird zumindest ein Teil der ankommenden Hohlleiterwelle ausgekoppelt und dem Modifikator 11 zugeführt. Das Mikrowellensignal wird dann mit einer sensorsignalabhängigen Information versehen und wieder über die Antenne 22 in die Zylinderkammer 13 eingekoppelt. Dort wird sie von der Antenne 17 am Zylinderdeckel 15 erfasst beziehungsweise eingekoppelt und der Auswerteeinrichtung 19 zugeführt, in der das enthaltene Sensorsignal des Differenzdrucksensors 20 ausgewertet und als entsprechendes Sensorsignal gebildet wird.

Der Modifikator 21 kann zur Übertragung der Sensorinformation unterschiedlich ausgebildet sein. Er kann eine rein passive Schaltung oder eine aktive Schaltung enthalten. Im Falle einer aktiven Schaltung wird ein Teil der ausgekoppelten Mikrowellenenergie in eine Versorgungsenergie umgewandelt. Bei einer passiven Ausführung ist dies nicht erforderlich.

Bei einer Ausführung eines passiven Modifikators 21 kann dieser beispielsweise einen Schwingkreis enthalten oder aus einem solchen bestehen, dessen Kapazität oder Induktivität durch den Differenzdrucksensor 20 gebildet wird. Eine Veränderung des Drucks führt dann zu einer Verschiebung der Resonanzfrequenz, und diese beeinflusst wiederum die zum Zylinderdeckel 15 zurückgeführte Mikrowelle. In der Auswerteeinrichtung 19 können dann resonanzbedingte Einbrüche im Betrag der rücklaufenden Welle beispielsweise mittels eines Frequenz-Sweeps oder eines Gradienten-Verfahrens erfasst werden und aus diesen das Sensorsignal abgeleitet werden. Eine andere Möglichkeit besteht dadurch, dass das Abklingverhalten des Resonanzkreises nach dessen Erregung durch Erfassung der dadurch beeinflussten, zur Auswerteeinrichtung 19 geführten Mikrowelle erfasst und ausgewertet wird.

Ein passiver Modifikator 21 mit einer ohne Versorgungsspannung arbeitenden Schaltung kann dennoch nichtlineare Bauteile aufweisen. So könnte zum Beispiel mittels eines passiven Frequenzvervielfachers das Signal des Differenzdrucksensors 20 unter Beachtung dann eventuell auftretender höherer Moden auf der doppelten Frequenz zurückgesendet und dadurch eine Entkopplung zwischen einer rücklaufenden Welle, die für die Positionsbestimmung genutzt wird, und einer rücklaufenden Welle, die vom Drucksignal beeinflusst wird, erreicht werden.

Bei einer Ausbildung des Modifikators 21 mit einer aktiven Schaltung könnte das Sensorsignal mittels digitaler Übertragung, zum Beispiel durch digitale Aufmodulation auf die Mikrowelle, übertragen werden, wobei auch hier das Sensorsignal mit einer anderen Frequenz zur Auswerteeinrichtung 19 zurückgeführt werden kann.

Die Erfindung ist jedoch nicht auf die Übertragung von Signalen eines Differenzdrucksensors 20 mittels Mikrowellen beschränkt, sondern der Kolben 12 kann alternativ oder zusätzlich auch andere Sensoren enthalten, beispielsweise einfache Drucksensoren, Temperatursensoren, Beschleunigungssensoren und dergleichen.

Beim beschriebenen Ausführungsbeispiel werden die in den Zylinder 10 eingekoppelten und nach der Reflexion am Kolben 12 wieder ausgekoppelten Mikrowellen sowohl zur Positionserfassung des Kolbens als auch zur Sensorübertragung von am oder im Kolben 12 angeordneten Sensoren verwendet. Im einfachsten Fall können die Mikrowellen auch lediglich zur Übertragung der Signale eines einzigen Sensors am Kolben 12 verwendet werden, insbesondere wenn eine Positionserfassung nicht erforderlich ist.

Die in der Auswerteeinrichtung 19 ausgewerteten Sensorsignale und gegebenenfalls Positionssignale können über nicht dargestellte Leitungen oder drahtlos einer entfernt angeordneten Steuerelektronik übermittelt werden, wobei diese Leitungen zweckmäßigerweise als Busleitungen ausgebildet sein können. Die Steuerelektronik kann auch ganz oder teilweise im Zylinderdeckel 15 integriert sein.

Die im Ausführungsbeispiel dargestellte Antenne 17 am Zylinderdeckel 15 ist als konzentrischer Monopol mit Dachkapazität dargestellt und koppelt eine E01-Welle in den Zylinder 10 ein. Das erfindungsgemäße Verfahren funktioniert jedoch auch mit anderen Hohlleitermoden, wobei dann die Antenne 22 eine andere Gestalt aufweisen und/oder an einer anderen Stelle des Zylinderdeckels 15 angeordnet sein und/oder eine andere Orientierung aufweisen kann.

## Patentansprüche

1. Messvorrichtung zur Messung wenigstens eines Parameters in einem fluidischen Zylinder (10) mit Hilfe von Mikrowellen, mit einer an einem Zylinderdeckel (15) des Zylinders (10) angeordneten Sende-/Empfangsantennenanordnung (17) zum Absenden von Mikrowellen und zum Empfang der am Kolben (12) des Zylinders (10) reflektierten Mikrowellen, **dadurch gekennzeichnet, dass** am Kolben (12) des Zylinders (10) wenigstens ein mit einem Modifikator (21) verbundener Sensor (20) angeordnet ist, wobei der Modifikator (21) Mittel zur sensorsignalabhängigen Veränderung wenigstens eines Teils der reflektierten und rücklaufenden Mikrowellen aufweist.

2. Messvorrichtung nach Anspruch 1, **dadurch gekennzeichnet, dass** am Kolben (12) eine mit dem Modifikator (21) verbundene Antennenanordnung (22) zum Auskoppeln wenigstens eines Teils der ankommenden Mikrowellen und zum Auskoppeln und Abstrahlen der in Abhängigkeit der Sensorsignale modifizierten Mikrowellen angeordnet ist.

3. Messvorrichtung nach Anspruch 2, **dadurch gekennzeichnet, dass** die Antennenanordnung (22) des Kolbens (12) als in oder an der Oberfläche des Kolbens (12) integrierte Antennenanordnung (22), insbesondere als wenigstens eine konforme Antenne oder als Patch-Antenne, ausgebildet ist.

4. Messvorrichtung nach einem der vorhergehenden Ansprüche, **dadurch gekennzeichnet, dass** als Sensor (20) ein Drucksensor und/oder Beschleunigungssensor und/oder Temperatursensor vorgesehen ist.

5. Messvorrichtung nach Anspruch 4, **dadurch gekennzeichnet, dass** der als Drucksensor ausgebildete Sensor (20) ein Differenzdrucksensor zur Erfassung der in den beiden durch den Kolben (12) getrennten Zylinderkammern (13, 14) vorliegenden Drücke ist.

6. Messvorrichtung nach einem der vorhergehenden Ansprüche, **dadurch gekennzeichnet, dass** die Sende-/Empfangsantennenanordung (17) am Zylinderdeckel (15) mit einer Auswerteeinrichtung (19) zur Auswertung der reflektierten und über die Sende-/Empfangsantennenanordnung (17) wieder ausgekoppelten Mikrowellen und mit einem Mikrowellengenerator (18) verbunden ist, wobei die Auswerteeinrichtung (19) und/oder der Mikrowellengenerator (18) vorzugsweise in oder am Zylinderdeckel (15) angeordnet oder integriert ist.

7. Messvorrichtung nach Anspruch 6, **dadurch gekennzeichnet, dass** der Modifikator (21) als passiver Modifikator ausgebildet ist, wobei der wenigstens eine Sensor (20) in einem Schwingkreis eingebunden ist und insbesondere dessen Kapazität bildet, und wobei die Auswerteeinrichtung (19) Mittel zur Erfassung von resonanzbedingten Veränderungen der reflektierten rücklaufenden Mikrowellen besitzt.

8. Messvorrichtung nach Anspruch 6, **dadurch gekennzeichnet, dass** der Modifikator (21) als passiver Modifikator ausgebildet ist und einen passiven Frequenzvervielfacher sowie Mittel zum Zurücksenden von sensorsignalabhängigen Informationen mittels über in ihrer Frequenz veränderten Mikrowellen besitzt.

9. Messvorrichtung nach Anspruch 6, **dadurch gekennzeichnet, dass** der Modifikator (21) als aktiver Modifikator ausgebildet ist und Mittel zur Erzeugung von Versorgungsenergie aus den empfangenen Mikrowellen sowie Mittel zum sensorsignalabhängigen Aufprägen oder Verändern der zurückgesendeten und rücklaufenden Mikrowellen besitzt.

10. Messvorrichtung nach Anspruch 6, **dadurch gekennzeichnet, dass** die Auswerteeinrichtung (19) Mittel zur Positionserfassung des Kolbens (12) durch Laufzeitmessung der abgesendeten und reflektierten Mikrowellen besitzt, insbesondere durch Erfassung der Phasenverschiebung.

## Claims

1. Measuring device for the measurement of one or more parameters in a fluidic cylinder (10) with the aid of microwaves, with a transceiver aerial assembly (17) mounted on a cylinder cover (15) of the cylinder (10) for the sending of microwaves and for the receiving of the microwaves reflected at the piston (12) of the cylinder (10), **characterised in that** there is provided on the piston (12) of the cylinder (10) at least one sensor (20) connected to a modifier (21), wherein the modifier (21) has means for the sensor-signal-dependent modification of at least a portion of the reflected and returning microwaves.

2. Measuring device according to claim 1, **characterised in that** there is mounted on the piston (12) an aerial assembly (22) connected to the modifier (21) for coupling out at least a portion of the incoming microwaves, and for coupling out and emitting the microwaves modified depending on the sensor signals.

3. Measuring device according to claim 2, **characterised in that** the aerial assembly (22) of the piston (12) is in the form of an aerial assembly (22) integrated in or on the surface of the piston (12), in particular as at least a conforming aerial or a patch aerial.

4. Measuring device according to any of the preceding claims, **characterised in that** a pressure sensor and/or acceleration sensor and/or temperature sensor is or are provided as the sensor (20).

5. Measuring device according to claim 4, **characterised in that** the sensor (20) in the form of a pressure sensor is a differential pressure sensor for detecting the pressures obtaining in the two cylinder chambers (13, 14) divided by the piston (12).

6. Measuring device according to any of the preceding claims, **characterised in that** the transceiver aerial assembly (17) is connected at the cylinder cover (15) to an evaluation unit (19) for the analysis of the microwaves reflected and again coupled out via the transceiver aerial assembly (17), and to a microwave generator (18), wherein the evaluation unit (19) and/or the microwave generator (18) are preferably mounted in or on or are integral with the cylinder cover (10).

7. Measuring device according to claim 6, **characterised in that** the modifier (21) is in the form of a passive modifier, wherein the sensor or sensors (20) is or are integrated in a resonant circuit and in particular form its capacity, and wherein the evaluation unit (19) has means of detecting modifications of the reflected, returning microwaves due to resonance.

8. Measuring device according to claim 6, **characterised in that** the modifier (21) is in the form of a passive modifier and has a passive frequency multiplier together with means of returning sensor-signal-dependent information by means of microwaves with modified frequency.

9. Measuring device according to claim 6, **characterised in that** the modifier (21) is in the form of an active modifier and has means of generating power from the received microwaves, also means for the sensor-signal-dependent modulation or modification of the returned and returning microwaves.

10. Measuring device according to claim 6, **characterised in that** the evaluation unit (19) has means for determining the position of the piston (12) through reflection time measurement of the emitted and reflected microwaves, in particular by determining the phase displacement.

## Revendications

1. Dispositif de mesure destiné à la mesure d'au moins un paramètre dans un cylindre fluidique (10) à l'aide de micro-ondes, avec un système d'antenne d'émission/réception (17) placé sur un couvercle de cylindre (15) du cylindre (10) pour émettre des micro-ondes et recevoir les micro-ondes réfléchies sur le piston (12) du cylindre (10), **caractérisé en ce qu'**au moins un capteur (20) relié à un modificateur (21) est placé sur le piston (12) du cylindre (10), le modificateur (21) présentant des moyens pour modifier, en fonction du signal du capteur, au moins une partie des micro-ondes réfléchies et revenant.

2. Dispositif de mesure selon la revendication 1, **caractérisé en ce que** sur le piston (12) est placé un système d'antenne (22) relié au modificateur (21) pour découpler au moins une partie des micro-ondes incidentes et pour découpler et émettre les micro-ondes modifiées en fonction des signaux du capteur.

3. Dispositif de mesure selon la revendication 2, **caractérisé en ce que** le système d'antenne (22) du piston (12) est conformé en système d'antenne (22) intégré dans ou sur la surface du piston (12), en particulier en au moins une antenne conforme ou en antenne à plaque.

4. Dispositif de mesure selon l'une des revendications précédentes, **caractérisé en ce que,** comme capteur (20), il est prévu un capteur de pression et/ou un capteur d'accélération et/ou un capteur de température.

5. Dispositif de mesure selon la revendication 4, **caractérisé en ce que** le capteur (20) conformé en capteur de pression est un capteur de pression différentielle destiné à relever les pressions régnant dans les deux chambres (13, 14) du cylindre séparées par le piston (12).

6. Dispositif de mesure selon l'une des revendications précédentes, **caractérisé en ce que** le système d'antenne d'émission/réception (17) est relié sur le couvercle de cylindre à un dispositif d'analyse (19), destiné à exploiter les micro-ondes réfléchies et de nouveau découplées par le système d'antenne d'émission/réception (17), ainsi qu'à un générateur (18) de micro-ondes, le dispositif d'analyse (19) et/ou le générateur de micro-ondes (18) étant placé ou intégré de préférence dans ou sur le couvercle de cylindre (15).

7. Dispositif de mesure selon la revendication 6, **caractérisé en ce que** le modificateur (21) est conformé en modificateur passif, le capteur (20) au nombre d'au moins un étant inséré dans un circuit oscillant et formant en particulier la capacité de celui-ci, et le dispositif d'analyse (19) possédant des moyens pour relever des modifications par résonance des micro-ondes de retour réfléchies.

8. Dispositif de mesure selon la revendication 6, **caractérisé en ce que** le modificateur (21) est conformé en modificateur passif et possède un multiplicateur de fréquence passif ainsi que des moyens pour renvoyer des informations, fonction des signaux du capteur, sur des micro-ondes de fréquence modifiée.

9. Dispositif de mesure selon la revendication 6, **caractérisé en ce que** le modificateur (21) est conformé en modificateur actif et possède des moyens pour produire une énergie d'alimentation à partir des micro-ondes reçues, ainsi que des moyens pour empreindre ou modifier les micro-ondes renvoyées et revenant.

10. Dispositif de mesure selon la revendication 6, **caractérisé en ce que** le dispositif d'analyse (19) possède des moyens pour relever la position du piston (12) par mesure du temps de parcours des micro-ondes émises et réfléchies, en particulier par relevé du décalage de phase.
